# EUROPEAN PATENT APPLICATION

(11) **EP 4 224 419 A1**
(43) Date of publication of application: **09.08.2023**
(21) Application number: 21874538.8
(22) Date of filing: 29.09.2021
(51) Int. Cl.: G06T 7/11, G06T 19/00

(54) **SCANNING RESULT PROCESSING METHOD AND APPARATUS, AND PROCESSOR AND SCANNING SYSTEM**

(30) Priority: 29.09.2020 CN 202011057266
(71) Applicant: Shining 3D Tech Co., Ltd., Hangzhou, Zhejiang 311258 (CN)
(72) Inventor: MA, Tengchao, Hangzhou, Zhejiang 311258 (CN)
(74) Representative: Grünecker Patent- und Rechtsanwälte PartG mbB
(86) International application number: PCT/CN2021/121752
(87) International publication number: WO 2022/068883

(57) **Abstract**

The present disclosure provides a method and device for processing a scan result, a processor and a scanning system. The processing method includes: acquiring a scan result of a to-be-detected object, wherein the scan result includes at least one of a two-dimensional image and a three-dimensional model; invoking an intelligent recognition function to recognize the scan result to obtain a classification result, wherein the intelligent recognition function is a classification model obtained by training a picture sample; and determining invalid data in the scan result based on the classification result, wherein the invalid data is a scan result of a non-target area in the to-be-detected object.

## Description

The present disclosure claims the benefit of priority of Chinese patent disclosure No.202011057266.1, entitled "METHOD AND DEVICE FOR PROCESSING SCAN RESULT, PROCESSOR AND SCANNING SYSTEM", filed to China National Intellectual Property Administration on September 29, 2020, the entire contents of which are incorporated herein by reference.

### Technical Field

The present disclosure relates to the technical field of scanners, and in particular relates to a method and device for processing a scan result, a computer-readable storage medium, a processor and a scanning system.

### Background

In digital prosthodontics design application, to extract patient oral tooth data, an intraoral scanner is adopted for scanning and collecting and mainly collects tooth and gum data. However, an oral environment is relatively narrow, and thus images of a tongue, a lip, cheeks and auxiliary tools are likely to be collected in the scanning process, resulting in generated model data including invalid data, and there are following main influences:
1. In the scanning process, when data is not about teeth or gums, some interference will be generated for splicing of newly-scanned data, such as difficult splicing of new data of some areas.
2. In grid data optimization, invalid data about parts spaced from the teeth can be deleted through related algorithms; but invalid data about connected parts are required to be actively deleted, and in a case that the invalid data about connected parts is not actively deleted, the invalid data about connected part will be retained, which increases a check, select and delete step, influencing overall scanning efficiency.

A digital model data generation process includes: an original depth image→point cloud data (reconstruction)->a mesh model (fusion), and thus, when a frame of data includes images of the lip and the cheeks, fused grid data will include these triangular mesh patches, namely, unnecessary unwanted data.

In the intraoral data scanning and collecting process, some data not about the teeth or the gums is likely to occur due to the limited intraoral space, which will be presented in a scan result and have a certain influence on new data scanning and overall data optimization. The tooth data scanning is a real-time and continuous process, a scanning frame rate is relatively high, and generation of the unwanted data will affect the scanning process of an operator. Most of the generated unwanted data will be removed by adopting algorithms such as "island removal" and "strongly connected". But algorithm processing is relatively time-consuming, which can only be intermittently executed. When some unwanted data cannot be removed by the algorithms, manual deletion is required.

In the related art, methods for removing some unwanted data mainly include: analyzing generated data, finding invalid data points considered not to meet conditions through data block (point) relevance, such as whether there are some isolated data blocks (points), or through some limiting conditions or strategies, and then deleting the points from the integral data.

However, real-time performance of intraoral data scanning is relatively high, while along with increasing of integral grid data, in a case that a deletion optimization algorithm is about to be performed, scanning needs to pause to wait for optimization completed, which affects scanning efficiency. In addition, the algorithms are strategy-based to a certain degree, and are relatively absolute, which can only be specific to data under general situations but cannot remove invalid data under some relatively special situations.

The foregoing information disclosed in the background are only intended to facilitate understanding of the background of the technology described herein, and thus, the background may include some information which is, for those skilled in the art, not constituted in the existing prior art in China.

### Summary

A main objective of the present disclosure is to provide a method and device for processing a scan result, a computer-readable storage medium, a processor and a scanning system, thereby solving the problem that a method for processing a scan result in the prior art determines invalid data through data analysis, resulting in low scanning efficiency.

According to one aspect of the embodiment of the present disclosure, a method for processing a scan result is provided, and includes: acquiring a scan result of a to-be-detected object, wherein the scan result includes at least one of a two-dimensional image and a three-dimensional model; invoking an intelligent recognition function to recognize the scan result to obtain a classification result, wherein the intelligent recognition function is a classification model obtained by training a picture sample; and determining invalid data in the scan result based on the classification result, wherein the invalid data is a scan result of a non-target area in the to-be-detected object.

In some embodiments, the scan result is the two-dimensional image which includes a texture image. The classification result includes: first image data, corresponding to a target area in the to-be-detected object, in the texture image, and second image data, corresponding to the non-target area in the to-be-detected object, in the texture image.

In some embodiments, the scan result further includes a reconstruction image corresponding to the texture image. The determining invalid data in the scan result based on the classification result includes: constructing three-dimensional point clouds based on the reconstruction image, and determining invalid point clouds based on a corresponding relationship between the reconstruction image and the texture image, wherein the invalid point clouds are point clouds, corresponding to the second image data, in the three-dimensional point clouds; deleting the invalid point clouds in the three-dimensional point clouds; and based on remaining point clouds in the three-dimensional point clouds, performing splicing the remaining point clouds in the three-dimensional point clouds to obtain a valid three-dimensional model of the to-be-detected object.

In some embodiments, when the three-dimensional model of the to-be-detected object succeeds in reconstruction, the scan result is the three-dimensional model, wherein the invoking an intelligent recognition function to recognize the scan result to obtain a classification result further includes: acquiring three-dimensional point cloud data for reconstructing the three-dimensional model; and invoking the intelligent recognition function to analyze the three-dimensional point cloud data and recognize the classification result of the three-dimensional point cloud data, wherein the classification result includes: first point cloud data, corresponding to a target area in the to-be-detected object, in the three-dimensional point cloud data, and second point cloud data, corresponding to the non-target area in the to-be-detected object, in the three-dimensional point cloud data.

In some embodiments, in a case that it is determined that the second point cloud data is the invalid data, point cloud data of a valid area in the three-dimensional model is determined by deleting the invalid data in the three-dimensional point cloud data.

In some embodiments, before acquiring three-dimensional point cloud data for reconstructing the three-dimensional model, the method further includes: collecting a two-dimensional image of the to-be-detected object; and obtaining the three-dimensional point cloud data through three-dimensional reconstruction based on the two-dimensional image, and performing splicing the reconstructed three-dimensional point cloud data to obtain the three-dimensional model.

In some embodiments, before acquiring a scan result of a to-be-detected object, the method further includes: starting and initializing a scanning process and an Artificial Intelligence (AI) recognition process, wherein the scanning process is used for executing scanning of the to-be-detected object, and the AI recognition process is used for recognizing and classifying the scan result.

In some embodiments, in a process of initializing the scanning process and the AI recognition process, monitoring whether the scanning process and the AI recognition process succeed in communication , and after successful connection is confirmed, in a case that the scan result is detected, the scanning process sends a processing instruction to the AI recognition process, wherein the AI recognition process invokes, based on the processing instruction, the intelligent recognition function to recognize the scan result.

In some embodiments, in a process of monitoring whether the scanning process and the AI recognition process succeed in communication, the AI recognition process runs in parallel, and in a case that a running environment satisfies preset conditions, the AI recognition process initializes a recognition algorithm, and the AI recognition process executes the intelligent recognition function after the processing instruction is received and the recognition algorithm succeeds in initialization.

According to another aspect of the embodiment of the present disclosure, an device for processing a scan result is further provided, and includes an acquiring unit configured to acquire a scan result of a to-be-detected object, wherein the scan result includes at least one of a two-dimensional image and a three-dimensional model; a first recognition unit configured to invoke an intelligent recognition function to recognize the scan result to obtain a classification result, wherein the intelligent recognition function is a classification model obtained by training a picture sample; and a first determining unit configured to determine invalid data in the scan result based on the classification result, wherein the invalid data is a scan result of a non-target area in the to-be-detected object.

According to another aspect of the embodiment of the present disclosure, a storage medium is further provided and includes stored programs, wherein the programs execute any processing method.

According to another aspect of the embodiment of the present disclosure, a processor is further provided and configured to operate programs, wherein the programs, when operating, execute any processing method.

According to another aspect of the embodiment of the present disclosure, a scanning system is further provided and includes a scanner and an device for processing a scan result. The device for processing a scan result is configured to execute any processing method.

In the foregoing processing method, firstly, the scan result of the to-be-detected object is acquired, that is, at least one of the two-dimensional image and the three-dimensional model obtained by scanning through the scanner are/is acquired; then, the intelligent recognition function is invoked to recognize the scan result to obtain the classification result, that is, at least one of the two-dimensional image and the three-dimensional model are/is classified through the trained classification model; and finally, based on the classification result, the invalid data in the scan result is determined, that is, at least one of the invalid data in the two-dimensional image and the three-dimensional model is removed according to the classification result, so that pausing scanning to determine the invalid data through data analysis is unnecessary, thereby improving scanning efficiency.

### Brief Description of the Drawings

Description drawings constituting a part of the present disclosure are used for providing further understanding for the present disclosure, and schematic embodiments of the present disclosure and explanations thereof are used for explaining the present disclosure but do not improperly limit the present disclosure. In the drawings:
FIG. 1 is a flowchart of a method for processing a scan result according to an embodiment of the present disclosure;
FIG. 2 is a schematic diagram of a three-dimensional model of a tooth and gum according to an embodiment of the present disclosure;
FIG. 3 is a flowchart of an AI recognition process according to an embodiment of the present disclosure;
FIG. 4 is a flowchart of start of a scanning process and an AI recognition process according to an embodiment of the present disclosure;
FIG. 5 is a flowchart of establishing a three-dimensional model of a to-be-detected object according to an embodiment of the present disclosure; and
FIG. 6 is a schematic diagram of an device for processing a scan result according to an embodiment of the present disclosure.

### Detailed Description of the Embodiments

It needs to be explained that embodiments in the present disclosure and features in the embodiments can be mutually combined without conflicts. The present disclosure is described in detail in reference to the drawings and in combination with the embodiments as below.

To make personnel in the technical field better understand schemes of the present disclosure, technical schemes in the embodiments of the present disclosure are clearly and integrally described by combining the drawings in the embodiments of the present disclosure as below, and it is apparent that the described embodiments are merely a part rather all embodiments of the present disclosure. Based on the embodiments of the present disclosure, all other embodiments obtained by those of ordinary skill in art without creative labor shall fall within the scope of protection of the present disclosure.

It needs to be explained that terms such as "first" and "second" of Description and Claims of the present disclosure and the foregoing drawings are used for distinguishing similar objects but are not intended to describe specific sequences or precedence orders. It is to be understood that adopted data can be exchanged under a proper situation so as to implement the embodiments, described herein, of the present disclosure. In addition, terms "include" and "have" and any transformations thereof are intended to cover non-exclusive inclusion. For example, a process, a method, a system, a product or a device including a series of steps or units is not limited to clearly-listed steps or units, but may include unclearly-listed other steps or units or other inherent steps or units of the process, the method, the product or the device.

It is to be understood that when an element (e.g., a layer, a film, an area or a substrate) is described to be "above" the other element, the element may be directly arranged on the other element, or there may be a middle element. In addition, in the Description and the Claims, when the element is described to be "connected" to the other element, the element may be "directly connected" to the other element, or may be "connected" to the other element through a third element.

As mentioned in the background, the method for processing a scan result in the prior art determines the invalid data through data analysis, which causes low scanning efficiency. In order to solve the foregoing problem, in a typical implementation of the present disclosure, a method and device for processing a scan result, a computer-readable storage medium, a processor and a scanning system are provided.

According to an embodiment of the present disclosure, a method for processing a scan result is provided.

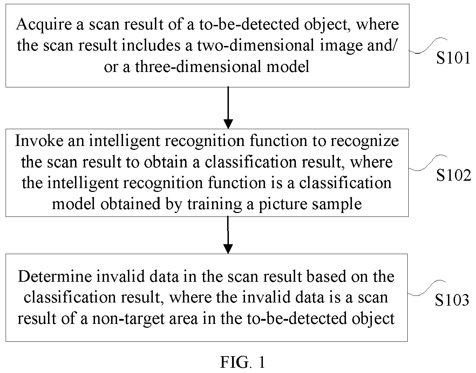

FIG. 1 is a flowchart of a method for processing a scan result according to an embodiment of the present disclosure. As shown in FIG. 1, the method includes following steps:
S101: A scan result of a to-be-detected object is acquired, wherein the scan result includes at least one of a two-dimensional image and a three-dimensional model.
S102: An intelligent recognition function is invoked to recognize the scan result to obtain a classification result, wherein the intelligent recognition function is a classification model obtained by training a picture sample.
S103: Based on the classification result, invalid data in the scan result is determined, wherein the invalid data is a scan result of a non-target area in the to-be-detected object.

In the foregoing processing method, firstly, the scan result of the to-be-detected object is acquired, that is, at least one of the two-dimensional image and the three-dimensional model obtained by scanning through a scanner are/is acquired; then, the intelligent recognition function is invoked to recognize the scan result to obtain the classification result, that is, at least one of the two-dimensional image and the three-dimensional model are/is classified through the trained classification model; and finally, based on the classification result, the invalid data in the scan result is determined, that is, at least one of the invalid data in the two-dimensional image and the three-dimensional model is removed according to the classification result, so that pausing scanning to determine the invalid data through data analysis is unnecessary, thereby improving scanning efficiency.

It needs to be explained that steps shown in a flowchart of the drawings may be performed in a computer system with a set of computer executable instructions. In addition, although a logical sequence is shown in the flowchart, but under some situations, the illustrated or described steps may be performed in sequence different from the sequence herein.

In an embodiment of the present disclosure, the foregoing scan result is the foregoing two-dimensional image which includes a texture image. The foregoing classification result includes: first image data, corresponding to a target area in the foregoing to-be-detected object, in the foregoing texture image, and second image data, corresponding to a non-target area in the foregoing to-be-detected object, in the foregoing texture image. In some embodiments, the texture image is recognized by the intelligent recognition function, so that the texture image is divided into the first image data and the second image data. The first image data is image data, corresponding to the target area in the to-be-detected object, in the texture image, and the second image data is image data, corresponding to the non-target area in the to-be-detected object, in the texture image. The target area and the non-target area are determined according to presetting. For example, the to-be-detected object is an oral cavity, the target area includes teeth and gums, the non-target area includes a tongue, a lip, cheeks, etc., the first image data is image data corresponding to the teeth and the gums, and the second image data is image data corresponding to areas such as the tongue, the lip and the cheeks. Of course, the target area and the non-target area can be adjusted according to actual needs. For example, when only tooth data is needed, the gums may be preset as the non-target area. The classification result includes the teeth, the gums, the tongue, the lip and the cheeks, and certainly, may also include the teeth, the gums and others. The tongue, the lip and the cheeks are classified as others. The classification result may also include a target category and a non-target category. The teeth and the gums are classified as the target category, and the tongue, the lip and the cheeks are classified as the non-target category (i.e., others).

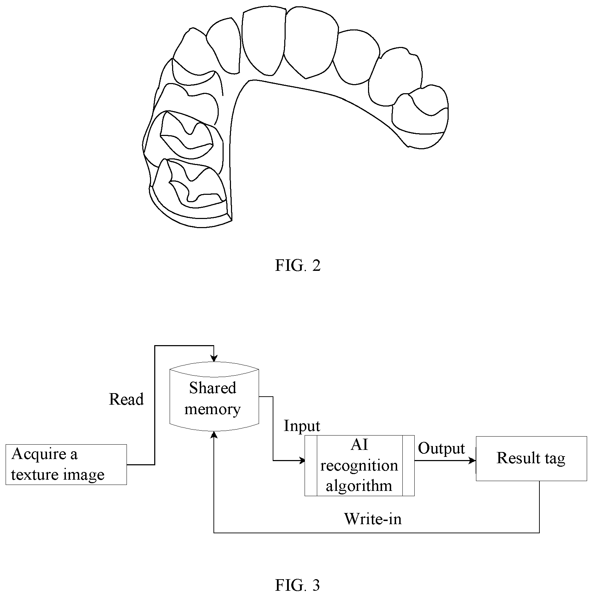

In an embodiment of the present disclosure, the foregoing two-dimensional image further includes a reconstruction image corresponding to the foregoing texture image. The determining invalid data in the foregoing scan result based on the foregoing classification result includes following steps: three-dimensional point clouds are constructed based on the reconstruction image, and invalid point clouds are determined based on a corresponding relationship between the reconstruction image and the texture image, wherein the invalid point clouds are point clouds, corresponding to the second image data, in the three-dimensional point clouds; the invalid point clouds in the three-dimensional point clouds are deleted; and based on remaining point clouds in the three-dimensional point clouds, splicing the remaining point clouds in the three-dimensional point clouds is performed to obtain a valid three-dimensional model of the to-be-detected object. In some embodiments, the three-dimensional point clouds are constructed based on the reconstruction image, the point clouds, corresponding to the second image data, in three-dimensional point cloud data are determined based on the corresponding relationship between the reconstruction image and the texture image so as to determine the invalid point clouds, and after the invalid point clouds are deleted, the remaining point clouds can be spliced to obtain the valid three-dimensional model of the to-be-detected object. For example, a first-frame of the two-dimensional image and a second-frame of the two-dimensional image are acquired, remaining point clouds of the first frame are acquired based on the first-frame of the two-dimensional image, remaining point clouds of the second frame are acquired based on the second-frame of the two-dimensional image, and the remaining point clouds of the first frame and the remaining point clouds of the second frame are spliced. In some embodiments, the to-be-detected object is an oral cavity, a target area includes teeth and gums, a non-target area includes a tongue, a lip, cheeks, etc., point clouds corresponding to areas such as the tongue, the lip and the cheeks are deleted, and the remaining point clouds are spliced to obtain the three-dimensional model of the teeth and the gums, which are shown in FIG. 2.

In an embodiment of the present disclosure, when the three-dimensional model of the to-be-detected object succeeds in reconstruction, the scan result is the three-dimensional model. The invoking an intelligent recognition function to recognize the foregoing scan result to obtain a classification result further includes following steps: three-dimensional point cloud data for reconstructing the three-dimensional model is acquired; and the intelligent recognition function is invoked to analyze the three-dimensional point cloud data and recognize the classification result of the three-dimensional point cloud data. The classification result includes: first point cloud data, corresponding to the target area in the to-be-detected object, in the three-dimensional point cloud data, and second point cloud data, corresponding to the non-target area in the to-be-detected object, in the three-dimensional point cloud data. In some embodiments, the three-dimensional point cloud data for reconstructing the three-dimensional model is recognized through the intelligent recognition function, so that the three-dimensional point cloud data is divided into the first point cloud data and the second point cloud data, the first point cloud data is point cloud data, corresponding to the target area in the to-be-detected object, in the three-dimensional point cloud data, and the second point cloud data is point cloud data, corresponding to the non-target area in the to-be-detected object, in the three-dimensional point cloud data. For example, the to-be-detected object is an oral cavity, the target area includes teeth and gums, and the non-target area includes a tongue, a lip, cheeks, etc. The first point cloud data is point cloud data corresponding to the teeth and the gums. The second point data is point cloud data corresponding to areas such as the tongue, the lip and the cheeks. The classification result includes the teeth, the gums, the tongue, the lip and the cheeks, and certainly, the classification result may also include the teeth, the gums and others. The tongue, the lip and the cheeks are classified as others. The classification result may also include a target category and a non-target category. The teeth and the gums are classified as the target category, and the tongue, the lip and the cheeks are classified as the non-target category (i.e., others).

In an embodiment of the present disclosure, in a case that it is determined that the second point cloud data is the invalid data, point cloud data of a valid area in the three-dimensional model is determined by deleting the invalid data in the three-dimensional point cloud data. In some embodiments, after it is determined that the second point cloud data is the invalid data, the invalid data in the three-dimensional model is deleted, so as to determine the valid area in the three-dimensional model, namely, an area corresponding to the to-be-detected object.

In an embodiment of the present disclosure, before acquiring three-dimensional point cloud data for reconstructing the three-dimensional model, the foregoing method further includes following steps: a two-dimensional image of the to-be-detected object is collected by scanning the to-be-detected object; and the three-dimensional point cloud data is obtained through three-dimensional reconstruction based on the two-dimensional image, and the three-dimensional model is obtained through splicing the reconstructed three-dimensional point cloud data, wherein a corresponding relationship exists between pixel points of the two-dimensional image and the three-dimensional point cloud data. In some embodiments, before acquiring three-dimensional point cloud data for reconstructing the three-dimensional model, the three-dimensional point cloud data corresponding to the to-be-detected object is obtained through three-dimensional reconstruction based on the collected two-dimensional image of the to-be-detected object, and the three-dimensional model of the to-be-detected object can be obtained through splicing the three-dimensional point cloud data corresponding to the to-be-detected object.

In an embodiment of the present disclosure, before acquiring a scan result of a to-be-detected object, the foregoing method further includes: a scanning process and an AI recognition process are started and initialized, wherein the scanning process is used for executing scanning of the to-be-detected object, and the AI recognition process is used for recognizing and classifying the scan result. In some embodiments, before acquiring the scan result of the to-be-detected object, the scanning process and the AI recognition process are started and initialized, the scanning process executes scanning of the to-be-detected object to obtain the scan result, the AI recognition process recognizes and classifies the scan result to obtain a classification result, and a previous scan result and a previous classification result are removed in the initializing process, which can avoid interference on a current processing process.

In an embodiment of the present disclosure, in a process of initializing the scanning process and the AI recognition process, monitoring whether the scanning process and the AI recognition process succeed in communication , and after successful connection is confirmed, in a case that the scan result is detected, the scanning process sends a processing instruction to the AI recognition process, wherein the AI recognition process invokes, based on the processing instruction, the intelligent recognition function to recognize the scan result. In some embodiments, in the process of initializing the scanning process and the AI recognition process, whether the scanning process and the AI recognition process succeed in communication is determined through monitoring, in a case that no communication is established between the scanning process and the AI recognition process, make communication connection between the scanning process and the AI recognition process, and under a situation of successful connection, after the scan result is detected, the scanning process sends the processing instruction to the AI recognition process, so that the AI recognition process invokes the intelligent recognition function to recognize the scan result.

In an embodiment of the present disclosure, in the process of monitoring whether the scanning process and the AI recognition process succeed in communication, the AI recognition process runs in parallel, and in a case that a running environment satisfies preset conditions, the AI recognition process initializes a recognition algorithm, and executes the intelligent recognition function after the processing instruction is received and the recognition algorithm succeeds in initialization. In some embodiments, after the AI recognition process is started, the AI recognition process runs in parallel, and in a case that the running environment satisfies the preset conditions, the AI recognition process initializes the recognition algorithm, so as to prevent the intelligent recognition function from failing in invoking later. After the recognition algorithm succeeds in initialization and the processing instruction is received, the AI recognition process executes the intelligent recognition function to recognize the scan result, that is, before the recognition algorithm succeeds in initialization, even the processing instruction is received, the AI recognition process does not execute the intelligent recognition function.

It needs to be explained that the AI recognition process runs in a separate process mode. Of course, AI recognition and scanning are set in the same process to be executed serially, and the AI recognition process and the scanning process are respectively independent, compared with serial connection of AI recognition and scanning, of which logics are more clear. An AI recognition function serving as a functional component is low in software coupling degree and easy to maintain and modify. In addition, demands can be added/modified only by adding/modifying corresponding communication protocols, and thus extensibility is high. Because the AI recognition function mainly depends on host hardware configuration, some checks and algorithm initialization are needed, and some time needs to be spent on start, the AI recognition function serving as the separate process is more reasonable in software structure.

In an actual running process, the scanning process and the AI recognition process are in communication and exchange data in a shared memory mode. In an embodiment of the present disclosure, as shown in FIG. 3, the AI recognition process includes following steps: the texture image acquired in the scanning process is read, the read image data is stored in a shared memory, the image data is input into an AI recognition algorithm, result tags are output and the result tags are written into the shared memory, wherein the result tags are in one-to-one correspondence to points corresponding to the image data. For example, a to-be-detected object is an oral cavity, a target area includes teeth and gums, a result tag 0 denotes others, a result tag 1 denotes the teeth, and a result tag 2 denotes the gums.

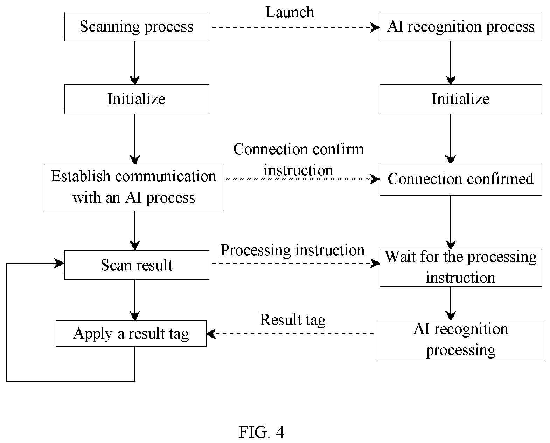

In an embodiment of the present disclosure, as shown in FIG. 4, starting the scanning process and the AI recognition process includes following steps: when the scanning process is started, the AI recognition process is launched, that is, the AI recognition process is started; the scanning process and the AI recognition process are initialized; communication between the scanning process and the AI recognition process is established; after connection is confirmed, the scanning process acquires a scan result, and a processing instruction is sent to the AI recognition process; the AI recognition process invokes, based on the processing instruction, an intelligent recognition function to recognize the scan result; and recognized result tags are written into a shared memory, and the scan result is processed by the scanning process based on the result tags.

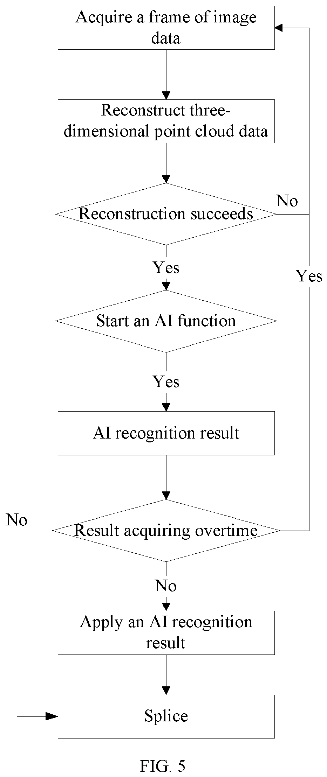

In an embodiment of the present disclosure, as shown in FIG. 5, establishing a three-dimensional model of a to-be-detected object includes following steps: a frame of image data is acquired; three-dimensional reconstruction is performed based on the image data to obtain three-dimensional point cloud data; after successful reconstruction, an AI intelligent recognition function is started; or otherwise, return is performed to acquire a next frame of image data; in a case that the AI intelligent recognition function fails in start, the three-dimensional point cloud data is directly spliced to obtain the three-dimensional model of the to-be-detected object; in a case that the AI intelligent recognition function succeeds in start, an AI recognition result is acquired; in a case that result acquiring is overtime, return is performed to acquire a next frame of image data; and in a case that no overtime, the AI recognition result is applied to process the three-dimensional point cloud data, invalid point clouds are deleted, and remaining point clouds are spliced to obtain the three-dimensional model of the to-be-detected object.

The embodiment of the present disclosure further provides an device for processing a scan result. It needs to be explained that the device for processing a scan result in the embodiment of the present disclosure can be configured to execute a method for processing a scan result according to the embodiment of the present disclosure. The device for processing a scan result according to the embodiment of the present disclosure is introduced as below.

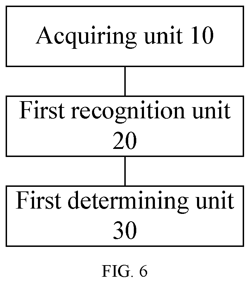

FIG. 6 is a schematic diagram of an device for processing a scan result according to an embodiment of the present disclosure. As shown in FIG. 6, the device includes:
an acquiring unit 10 configured to acquire a scan result of a to-be-detected object, wherein the scan result includes at least one of a two-dimensional image and a three-dimensional model;
a first recognition unit 20 configured to invoke an intelligent recognition function to recognize the scan result to obtain a classification result, wherein the intelligent recognition function is a classification model obtained by training a picture sample; and
a first determining unit 30 configured to determine invalid data in the scan result based on the classification result, where the invalid data is a scan result of a non-target area in the to-be-detected object.

In the foregoing processing device, the acquiring unit acquires the scan result of the to-be-detected object, that is, at least one of the two-dimensional image and the three-dimensional model obtained by scanning through a scanner are/is acquired; then, the recognition unit invokes the intelligent recognition function to recognize the scan result to obtain the classification result, that is, at least one of the two-dimensional image and the three-dimensional model are/is classified through the trained classification model; and the first determining unit determines the invalid data in the scan result based on the classification result, that is, at least one of the invalid data in the two-dimensional image and the three-dimensional model is determined according to the classification result, so that pausing scanning to determine the invalid data through data analysis is unnecessary, thereby improving scanning efficiency.

In an embodiment of the present disclosure, the foregoing scan result is the foregoing two-dimensional image which includes a texture image. The foregoing classification result includes: first image data, corresponding to a target area in the foregoing to-be-detected object, in the foregoing texture image, and second image data, corresponding to a non-target area in the foregoing to-be-detected object, in the foregoing texture image. In some embodiments, the texture image is recognized by the intelligent recognition function, so that the texture image is divided into the first image data and the second image data. The first image data is image data, corresponding to the target area in the to-be-detected object, in the texture image, and the second image data is image data, corresponding to the non-target area in the to-be-detected object, in the texture image. The target area and the non-target area are determined according to presetting. For example, the to-be-detected object is an oral cavity, the target area includes teeth and gums, the non-target area includes a tongue, a lip, cheeks, etc., the first image data is image data corresponding to the teeth and the gums, and the second image data is image data corresponding to areas such as the tongue, the lip and the cheeks. Of course, the target area and the non-target area can be adjusted according to actual needs. For example, when only tooth data is needed, the gums may be preset as the non-target area. The classification result includes the teeth, the gums, the tongue, the lip and the cheeks, and certainly, may also include the teeth, the gums and others. The tongue, the lip and the cheeks are classified as others. The classification result may also include a target category and a non-target category. The teeth and the gums are classified as the target category, and the tongue, the lip and the cheeks are classified as the non-target category (i.e., others).

In an embodiment of the present disclosure, the foregoing two-dimensional image further includes a reconstruction image corresponding to the foregoing texture image. The foregoing first determining unit includes a determining component, a first processing component and a second processing component, wherein the determining component is configured to construct three-dimensional point clouds based on the reconstruction image, and determine invalid point clouds based on a corresponding relationship between the reconstruction image and the texture image, wherein the invalid point clouds are point clouds, corresponding to the second image data, in the three-dimensional point clouds; the first processing component is configured to delete the invalid point clouds in the three-dimensional point clouds; and the second processing component is configured to splice remaining point clouds in the three-dimensional point clouds to obtain a valid three-dimensional model of the to-be-detected object. In some embodiments, the three-dimensional point clouds are constructed based on the reconstruction image, the point clouds, corresponding to the second image data, in three-dimensional point cloud data are determined based on the corresponding relationship between the reconstruction image and the texture image so as to determine the invalid point clouds, and after the invalid point clouds are deleted, the remaining point clouds can be spliced to obtain the valid three-dimensional model of the to-be-detected object. For example, a first-frame of the two-dimensional image and a second-frame of the two-dimensional image are acquired, remaining point clouds of the first frame are acquired based on the first-frame of the two-dimensional image, remaining point clouds of a second frame are acquired based on the second-frame of the two-dimensional image, and the remaining point clouds of the first frame and the remaining point clouds of the second frame are spliced. In some embodiments, the to-be-detected object is an oral cavity, a target area includes teeth and gums, a non-target area includes a tongue, a lip, cheeks, etc., point clouds corresponding to areas such as the tongue, the lip and the cheeks are deleted, and the remaining point clouds are spliced to obtain the three-dimensional model of the teeth and the gums, which are shown in FIG. 2.

In an embodiment of the present disclosure, when the three-dimensional model of the to-be-detected object succeeds in reconstruction, the scan result is the three-dimensional model, wherein the foregoing device further includes a second recognition unit. The second recognition unit includes a first acquiring component and a recognition component. The first acquiring component is configured to acquire three-dimensional point cloud data for reconstructing the three-dimensional model. The recognition component is configured to invoke the intelligent recognition function to analyze the three-dimensional point cloud data and recognize a classification result of the three-dimensional point cloud data. The classification result includes: first point cloud data, corresponding to the target area in the to-be-detected object, in the three-dimensional point cloud data, and second point cloud data, corresponding to the non-target area in the to-be-detected object, in the three-dimensional point cloud data. In some embodiments, the three-dimensional point cloud data for reconstructing the three-dimensional model is recognized through the intelligent recognition function, so that the three-dimensional point cloud data is divided into the first point cloud data and the second point cloud data, the first point cloud data is point cloud data, corresponding to the target area in the to-be-detected object, in the three-dimensional point cloud data, and the second point cloud data is point cloud data, corresponding to the non-target area in the to-be-detected object, in the three-dimensional point cloud data. For example, the to-be-detected object is an oral cavity, the target area includes teeth and gums, and the non-target area includes a tongue, a lip, cheeks, etc. The first point cloud data is point cloud data corresponding to the teeth and the gums. The second point data is point cloud data corresponding to areas such as the tongue, the lip and the cheeks. The classification result includes the teeth, the gums, the tongue, the lip and the cheeks, and certainly, the classification result may also include the teeth, the gums and others. The tongue, the lip and the cheeks are classified as others. The classification result may also include a target category and a non-target category. The teeth and the gums are classified as the target category, and the tongue, the lip and the cheeks are classified as the non-target category (i.e., others).

In an embodiment of the present disclosure, the foregoing device further includes a second determining unit. The second determining unit is configured to determine point cloud data of a valid area in the three-dimensional model by deleting the invalid data in the three-dimensional point cloud data in a case that it is determined that the second point cloud data is the invalid data. In some embodiments, after it is determined that the second point cloud data is the invalid data, the invalid data in the three-dimensional model is deleted, so as to determine the valid area in the three-dimensional model, namely, an area corresponding to the to-be-detected object.

In an embodiment of the present disclosure, the foregoing device further includes a reconstruction unit, and the reconstruction unit includes a second acquiring component and a reconstruction component. The second acquiring component is configured to collect a two-dimensional image of the to-be-detected object by scanning the to-be-detected object before acquiring three-dimensional point cloud data for reconstructing the three-dimensional model. The reconstruction component is configured to obtain the three-dimensional point cloud data through three-dimensional reconstruction based on the two-dimensional image, and obtain the three-dimensional model through splicing the reconstructed three-dimensional point cloud data, wherein a corresponding relationship exists between pixel points of the two-dimensional image and the three-dimensional point cloud data. In some embodiments, before acquiring the three-dimensional point cloud data for reconstructing the three-dimensional model, the three-dimensional point cloud data corresponding to the to-be-detected object is obtained through three-dimensional reconstruction based on the collected two-dimensional image of the to-be-detected object, and the three-dimensional model of the to-be-detected object can be obtained through splicing the three-dimensional point cloud data corresponding to the to-be-detected object.

In an embodiment of the present disclosure, the foregoing device further includes a control unit. The control unit is configured to start and initialize a scanning process and an AI recognition process before acquiring a scan result of a to-be-detected object. The scanning process is used for executing scanning of the to-be-detected object, and the AI recognition process is used for recognizing and classifying the scan result. In some embodiments, before acquiring the scan result of the to-be-detected object, the scanning process and the AI recognition process are started and initialized, the scanning process executes scanning of the to-be-detected object to obtain the scan result, the AI recognition process recognizes and classifies the scan result to obtain a classification result, and a previous scan result and a previous classification result are removed in the initializing process, which can avoid interference on a current processing process.

In an embodiment of the present disclosure, the control unit includes a first control component. The first control component is configured to monitor whether the scanning process and the AI recognition process succeed in communication in a process of initializing the scanning process and the AI recognition process, and after successful connection is confirmed, in a case that the scan result is detected, the scanning process sends a processing instruction to the AI recognition process. The AI recognition process invokes, based on the processing instruction, the intelligent recognition function to recognize the scan result. In some embodiments, in the process of initializing the scanning process and the AI recognition process, whether the scanning process and the AI recognition process succeed in communication is determined through monitoring, in a case that no communication is established between the scanning process and the AI recognition process, make communication connection between the scanning process and the AI recognition process, and under a situation of successful connection, after the scan result is detected, the scanning process sends the processing instruction to the AI recognition process, so that the AI recognition process invokes the intelligent recognition function to recognize the scan result.

In an embodiment of the present disclosure, the control unit further includes a second control component. The second control component is configured to monitor whether the scanning process and the AI recognition process succeed in communication, the AI recognition process runs in parallel, and in a case that a running environment satisfies preset conditions, the AI recognition process initializes a recognition algorithm, and executes the intelligent recognition function after the processing instruction is received and the recognition algorithm succeeds in initialization. In some embodiments, after the AI recognition process is started, the AI recognition process runs in parallel, and in a case that the running environment satisfies the preset conditions, the AI recognition process initializes the recognition algorithm, so as to prevent the intelligent recognition function from failing in invoking later. After the recognition algorithm succeeds in initialization and the processing instruction is received, the AI recognition process executes the intelligent recognition function to recognize the scan result, that is, before the recognition algorithm succeeds in initialization, even the processing instruction is received, the AI recognition process does not execute the intelligent recognition function.

It needs to be explained that the AI recognition process runs in a separate process mode. Of course, AI recognition and scanning are set in the same process to be executed serially, and the AI recognition process and the scanning process are respectively independent, compared with serial connection of AI recognition and scanning, of which logics are more clear. An AI recognition function serving as a functional component is low in software coupling degree and easy to maintain and modify. In addition, demands can be added/modified only by adding/modifying corresponding communication protocols, and thus extensibility is high. Because the AI recognition function mainly depends on host hardware configuration, some checks and algorithm initialization are needed, and some time needs to be spent on start, the AI recognition function serving as the separate process is more reasonable in software structure.

According to an embodiment of the present disclosure, a scanning system is further provided and includes a scanner and an device for processing a scan result. The device for processing a scan result is configured to execute any above processing method.

The foregoing scanning system includes the scanner and the device for processing a scan result. An acquiring unit acquires a scan result of a to-be-detected object, that is, at least one of a two-dimensional image and a three-dimensional model obtained by scanning through the scanner are/is acquired; then, a recognition unit invokes an intelligent recognition function to recognize the scan result to obtain a classification result, that is, at least one of the two-dimensional image and the three-dimensional model are/is classified through a trained classification model; and a first determining unit determines invalid data in the scan result based on the classification result, that is, at least one of the invalid data in the two-dimensional image and the three-dimensional model is determined according to the classification result, so that pausing scanning to determine the invalid data through data analysis is unnecessary, thereby improving scanning efficiency.

The above processing device includes a processor and a memory. The acquiring unit, the first recognition unit, the first determining unit, etc. all serve as program units to be stored in the memory, and the processor executes the program units stored in the memory to implement corresponding functions.

The processor includes a core, and the core invokes the corresponding program units from the memory. There may be one or more cores to be set, and by adjusting core parameters, the problem that a method for processing a scan result in the prior art determines invalid data through data analysis, resulting in low scanning efficiency is solved.

The memory may include a volatile memory, at least one of a RAM and a nonvolatile internal memory and other forms in a computer-readable medium, such as a ROM or a flash RAM, and the memory includes at least one memory chip.

An embodiment of the present disclosure provides a storage medium on which stored programs, and the programs are executed by a processor to implement the foregoing processing method.

An embodiment of the present disclosure provides a processor configured to operate programs, wherein the programs, when operating, execute the foregoing processing method.

An embodiment of the present disclosure provides a device, including a processor, a memory, and programs stored on the memory and operating on the processor. The processor executes the programs to implement at least following steps:
S101: A scan result of a to-be-detected object is acquired, wherein the scan result includes at least one of a two-dimensional image and a three-dimensional model.
S102: An intelligent recognition function is invoked to recognize the scan result to obtain a classification result, wherein the intelligent recognition function is a classification model obtained by training a picture sample.
S103: Based on the classification result, invalid data in the scan result is determined, wherein the invalid data is a scan result of a non-target area in the to-be-detected object.

The device herein may be a server, a Personal Computer (PC), a Portable Android Device (PAD), a mobile phone, etc.

The present disclosure further provides a computer program product. The computer program product, when executed on a data processing device, is suitable for initializing a program including following method steps:
S101: A scan result of a to-be-detected object is acquired, wherein the scan result includes at least one of a two-dimensional image and a three-dimensional model.
S102: An intelligent recognition function is invoked to recognize the scan result to obtain a classification result, wherein the intelligent recognition function is a classification model obtained by training a picture sample.
S103: Based on the classification result, invalid data in the scan result is determined, wherein the invalid data is a scan result of a non-target area in the to-be-detected object.

In the above embodiments of the present disclosure, a particular emphasis is laid on a description on each embodiment, and for parts not described in detail in an embodiment, please refer to related descriptions in other embodiments.

It is to be understood that technical contents disclosed by the several embodiments provided by the present disclosure may be implemented by other modes. The above described device embodiments are merely schematic, such as unit division which may be logic function division; and during practical implementation, there may be additional division modes, for example, a plurality of units or components may be combined or integrated into another system, or some features may be ignored or not executed. In addition, shown or discussed mutual coupling or direct coupling or communication connection may be realized through some interfaces, and unit or component indirect coupling or communication connection may be in an electrical form or other forms.

Units described as separation parts may be or may be not physically separated, and parts for unit display may be or may be not physical units, may be located at the same position, or may be distributed on a plurality of units. Part or all of the units may be selected according to actual demands to achieve objectives of the schemes of the embodiments.

In addition, functional units in the embodiments of the present disclosure may be integrated in one processing unit, or independently and physically exist, or two or more units may be integrated in one unit. The above integrated unit may be realized in a hardware form or a form of a software functional unit.

When the integrated unit is realized in the form of the software functional unit and serves as an independent product to be sold or used, the integrated unit may be stored in the computer-readable storage medium. Based on the understanding, the technical schemes of the present disclosure essentially or parts making contribution to the prior art or all or part of the technical schemes may be embodied in a software product form. A computer software product is stored in a storage medium and includes a plurality of instructions for making a computer device (a personal computer, a server, or a network device, or the like) perform all or part of the steps of the methods in the embodiments of the present disclosure. The foregoing storage medium includes a U disk, a Read-Only Memory (ROM), a Random Access Memory (RAM), a mobile hard disk, a diskette or a light disk or other media capable of storing program code.

It can be indicated from the foregoing descriptions that the foregoing embodiments of the present disclosure realize following technical effects:
1) In the processing method of the present disclosure, firstly, the scan result of the to-be-detected object is acquired, that is, at least one of the two-dimensional image and the three-dimensional model obtained by scanning through the scanner are/is acquired; then, the intelligent recognition function is invoked to recognize the scan result to obtain the classification result, that is, at least one of the two-dimensional image and the three-dimensional model are/is classified through the trained classification model; and finally, based on the classification result, the invalid data in the scan result is determined, that is, at least one of the invalid data in the two-dimensional image and the three-dimensional model is removed according to the classification result, so that pausing scanning to determine the invalid data through data analysis is unnecessary, thereby improving scanning efficiency.
2) In the processing device of the present disclosure, the acquiring unit acquires the scan result of the to-be-detected object, that is, at least one of the two-dimensional image and the three-dimensional model obtained by scanning through the scanner are/is acquired; the recognition unit invokes the intelligent recognition function to recognize the scan result to obtain the classification result, that is, at least one of the two-dimensional image and the three-dimensional model are/is classified through the trained classification model; and the first determining unit determines the invalid data in the scan result based on the classification result, that is, at least one of the invalid data in the two-dimensional image and the three-dimensional model is determined according to the classification result, so that pausing scanning to determine the invalid data through data analysis is unnecessary, thereby improving scanning efficiency.
3) The scanning system of the present disclosure includes the scanner and the device for processing a scan result; the acquiring unit acquires the scan result of the to-be-detected object, that is, at least one of the two-dimensional image and the three-dimensional model obtained by scanning through the scanner are/is acquired; the recognition unit invokes the intelligent recognition function to recognize the scan result to obtain the classification result, that is, at least one of the two-dimensional image and the three-dimensional model are/is classified through the trained classification model; and the first determining unit determines the invalid data in the scan result based on the classification result, that is, at least one of the invalid data in the two-dimensional image and the three-dimensional model is determined according to the classification result, so that pausing scanning to determine the invalid data through data analysis is unnecessary, thereby improving scanning efficiency.

The above embodiments are merely preferred embodiments of the present disclosure and are not used for limiting the present disclosure, and the present disclosure can be variously modified and changed for those skilled in the art. Any modification, equivalent replacement, improvement, etc. made within the spirit and the principle of the present disclosure shall fall within the scope of protection of the present disclosure.

### Industrial applicability

According to the schemes provided by the embodiments of the present disclosure, at least one of the two-dimensional image and the three-dimensional model obtained by scanning through the scanner are/is acquired; at least one of the two-dimensional image and the three-dimensional model are/is classified through the trained classification model; and at least one of the invalid data in the two-dimensional image and the three-dimensional model is removed according to the classification result, so that pausing scanning to determine the invalid data through data analysis is unnecessary, thereby improving scanning efficiency, and the problem that the method for processing a scan result in the prior art pauses scanning to perform data analysis on the scan result so as to determine invalid data, resulting in low scanning efficiency is solved.

## Claims

1. A method for processing a scan result, comprising:
acquiring a scan result of a to-be-detected object, wherein the scan result comprises at least one of a two-dimensional image and a three-dimensional model;
invoking an intelligent recognition function to recognize the scan result to obtain a classification result, wherein the intelligent recognition function is a classification model obtained by training a picture sample; and
determining invalid data in the scan result based on the classification result, wherein the invalid data is a scan result of a non-target area in the to-be-detected object.

2. The method as claimed in claim 1, wherein the scan result is the two-dimensional image, the two-dimensional image comprises a texture image, and the classification result comprises: first image data, corresponding to a target area in the to-be-detected object, in the texture image, and second image data, corresponding to the non-target area in the to-be-detected object, in the texture image.

3. The method as claimed in claim 2, wherein the two-dimensional image further comprises a reconstruction image corresponding to the texture image, and the determining invalid data in the scan result based on the classification result comprises:
constructing three-dimensional point clouds data based on the reconstruction image, and determining invalid point clouds data based on a corresponding relationship between the reconstruction image and the texture image, wherein the invalid point clouds data are point clouds data, corresponding to the second image data, in the three-dimensional point clouds data;
deleting the invalid point clouds data in the three-dimensional point clouds data; and
based on remaining point clouds data in the three-dimensional point clouds data, performing splicing the remaining point clouds data in the three-dimensional point clouds data to obtain a valid three-dimensional model of the to-be-detected object.

4. The method as claimed in claim 1, wherein when the three-dimensional model of the to-be-detected object succeeds in reconstruction, the scan result is the three-dimensional model, wherein the invoking an intelligent recognition function to recognize the scan result to obtain a classification result further comprises:
acquiring three-dimensional point cloud data for reconstructing the three-dimensional model; and
invoking the intelligent recognition function to analyze the three-dimensional point cloud data and recognize the classification result of the three-dimensional point cloud data, wherein
the classification result comprises: first point cloud data, corresponding to a target area in the to-be-detected object, in the three-dimensional point cloud data, and second point cloud data, corresponding to the non-target area in the to-be-detected object, in the three-dimensional point cloud data.

5. The method as claimed in claim 4, wherein in a case that it is determined that the second point cloud data is the invalid data, point cloud data of a valid area in the three-dimensional model is determined by deleting the invalid data in the three-dimensional point cloud data.

6. The method as claimed in claim 5, wherein before acquiring three-dimensional point cloud data for reconstructing the three-dimensional model, the method further comprises:
collecting a two-dimensional image of the to-be-detected object; and
obtaining the three-dimensional point cloud data through three-dimensional reconstruction based on the two-dimensional image, and performing splicing the reconstructed three-dimensional point cloud data to obtain the three-dimensional model.

7. The method as claimed in any one of claims 1 to 6, wherein before acquiring a scan result of a to-be-detected object, the method further comprises: starting and initializing a scanning process and an AI recognition process, wherein the scanning process is used for executing scanning of the to-be-detected object, and the AI recognition process is used for recognizing and classifying the scan result.

8. The method as claimed in claim 7, wherein in a process of initializing the scanning process and the AI recognition process, monitoring whether the scanning process and the AI recognition process succeed in communication, and after successful connection is confirmed, in a case that the scan result is detected, the scanning process sends a processing instruction to the AI recognition process, wherein the AI recognition process invokes, based on the processing instruction, the intelligent recognition function to recognize the scan result.

9. The method as claimed in claim 8, wherein in a process of monitoring whether the scanning process and the AI recognition process succeed in communication, the AI recognition process runs in parallel, and in a case that a running environment satisfies preset conditions, the AI recognition process initializes a recognition algorithm, and the AI recognition process executes the intelligent recognition function after the processing instruction is received and the recognition algorithm succeeds in initialization.

10. An device for processing a scan result, comprising:
an acquiring unit configured to acquire a scan result of a to-be-detected object, wherein the scan result comprises at least one of a two-dimensional image and a three-dimensional model;
a first recognition unit configured to invoke an intelligent recognition function to recognize the scan result to obtain a classification result, wherein the intelligent recognition function is a classification model obtained by training a picture sample; and
a first determining unit configured to determine invalid data in the scan result based on the classification result, wherein the invalid data is a scan result of a non-target area in the to-be-detected object.

11. A computer-readable storage medium, comprising stored programs, wherein the programs execute the processing method as claimed in any one of claims 1 to 9.

12. A processor, configured to operate programs, wherein the programs, when operating, execute the processing method as claimed in any one of claims 1 to 9.

13. A scanning system, comprising a scanner and an device for processing a scan result, wherein the device for processing a scan result is configured to execute the processing method as claimed in any one of claims 1 to 9.
